(19) Europäisches Patentamt / European Patent Office / Office européen des brevets

(11) **EP 4 050 039 B1**

(12) **EUROPEAN PATENT SPECIFICATION**

(45) Date of publication and mention of the grant of the patent:
**23.07.2025 Bulletin 2025/30**

(21) Application number: **21159731.5**

(22) Date of filing: **26.02.2021**

(51) International Patent Classification (IPC):
*C08F 2/22* (2006.01)    *C08F 265/04* (2006.01)
*C08L 33/04* (2006.01)    *C08L 27/06* (2006.01)
*C10M 107/28* (2006.01)    *C08F 2/26* (2006.01)
*C08F 265/06* (2006.01)    *C08L 51/00* (2006.01)
*C10M 177/00* (2006.01)    *C10N 30/02* (2006.01)
*C10N 40/36* (2006.01)    *C10N 50/00* (2006.01)
*C10N 50/08* (2006.01)    *C10N 70/00* (2006.01)

(52) Cooperative Patent Classification (CPC):
(C-Sets available)
**C10M 177/00; C08F 2/26; C08F 265/04;
C08F 265/06; C08L 27/06; C08L 51/003;
C10M 107/28;** C08L 2207/53; C10M 2209/0845;
C10N 2030/02; C10N 2040/36; C10N 2050/08;
C10N 2050/14; C10N 2070/00          (Cont.)

(54) **CORE-SHELL LUBRICANT FOR POLYMER RESINS**

KERN-SCHALE-GLEITMITTEL FÜR POLYMERHARZE

LUBRIFIANT CORE-SHELL POUR RÉSINES POLYMÈRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.08.2022 Bulletin 2022/35**

(73) Proprietor: **Kaneka Belgium N.V.
2260 Westerlo-Oevel (BE)**

(72) Inventors:
• **Aeschlimann, Jacques
2260 Westerlo-Oevel (BE)**

• **Braun, Harald
2260 Westerlo-Oevel (BE)**
• **Janssens, Wout
2260 Westerlo-Oevel (BE)**
• **Nakamura, Mitsuru
2260 Westerlo-Oevel (BE)**

(74) Representative: **Nederlandsch Octrooibureau
P.O. Box 29720
2502 LS The Hague (NL)**

(56) References cited:
**EP-A1- 0 558 279      EP-B1- 0 558 279
US-A- 5 612 413      US-A1- 2004 152 821**

EP 4 050 039 B1

(52) Cooperative Patent Classification (CPC): (Cont.)

C-Sets
**C08F 265/06, C08F 212/08, C08F 220/14,
C08F 220/1804;
C08F 265/06, C08F 212/08, C08F 220/14,**

**C08F 220/1804, C08F 220/40;
C08F 265/06, C08F 220/14, C08F 220/1804,
C08F 220/40;
C08L 27/06, C08L 51/003;
C08L 51/003, C08L 27/06;**
C10M 2209/0845, C10N 2020/071

## Description

### Field

The invention relates to the field of reactions of lubricants for polyvinyl chloride.

### Background of the invention

Lubricants have been used as additives in polymer resins such as polyvinyl chloride in order to prevent adhesion of the polymers resins to surfaces, such as mold surfaces, during processing. Core-shell lubricants have been described for this purpose. EP0532234, for example, discloses core-shell lubricants comprising a (meth)acrylate core and a (meth) acrylate shell as a lubricant for a polyvinyl resin. EP0779336 is another example of such a core-shell lubricant. However, core-shell (meth)acrylate lubricants are generally not free-flowing powders and are formulated as liquids. This complicates their handling during the processing of the polymer resin. Moreover, these (meth)acrylate core-shell lubricants typically show a mediocre ability for external lubrication of a polymer resin. US2004/152821 A1 and US5612413A also disclose core-shell copolymer compositions for modifying properties of vinyl chloride resins.

Hence, there is an unmet need in the art for (meth)acrylate core-shell lubricants having good powder properties, i.e. foaming powders being free-flowing powders, with a good ability for external lubrication of a polymer resin.

### Description of the invention

*Lubricants*

In a first aspect, the invention provides a composition comprising a lubricant and polyvinylchloride wherein the lubricant is a lubricant for polyvinyl chloride comprising a core and a shell, wherein said core composition comprises 5-60 weight percent of a first core (meth)acrylate monomer and 40-95 weight percent of a second core (meth)acrylate monomer, wherein said first core (meth)acrylate monomer is esterified to a straight or branched alkyl comprising not more than 4 carbon atoms, wherein said second core (meth)acrylate monomer is esterified to a straight or branched alkyl comprising at least 5 and not more than 24 carbon atoms; wherein said shell comprises one or more layers obtainable by polymerization of a shell composition; wherein said shell comprises one or more layers obtainable by polymerization of a shell composition, wherein said shell composition comprises a crosslinking agent; wherein said shell has a glass transition temperature from 60°C to 120°C; wherein the ratio of the mass of said core to the mass of said shell is from 30/70 to 90/10.

Exemplary lubricants according to the invention A-G have been prepared using the protocols in Example 1 and compositions described in Example 2. Their external lubrication and powder properties are described in Example 3.

A lubricant, in the context of this application, is a composition suitable for use as an internal and/or external lubricant in polymer resins. An internal lubricant is a composition which is suitable for addition to a polymer resin, whereby said addition reduces the internal friction in said polymer resin and/or reduces the viscosity of said polymer resin. An external lubricant is a composition which is suitable for addition to a polymer resin, whereby said addition reduces the ability of said polymer resin to adhere to a surface, specifically to a metal surface. In other words, a lubricant according to the invention is suitable for use as an additive for internal and/or external lubrication of a polymer resin. A lubricant according to the invention is suitable for use as an additive for external lubrication of a polyvinyl chloride resin.

It is well-known to the skilled person that external lubricant is added to polymer resins during processing in order to prevent the polymer resin from adhering or sticking to surfaces such as mold surfaces. After processing, such as molding the polymer resin into a solid plastics, these external lubricants further prevent the solid plastics from adhering to each other.

Several quantitative tests have been developed to describe the ability of a lubricant for external lubrication of a polymer resin.

In the Brabender gelation test, which is well-known to the skilled person, the time is measured for a polyvinyl powder comprising said lubricant to gelate in a Brabender measuring mixer operating at a given temperature and torque. For a given set of operating conditions, a longer gelation time indicates a higher ability for external lubrication.

In this application, the Brabender gelation test is performed by supplying 47 g of a polyvinyl powder sample in a Brabender measuring mixer operating at 145°C and 30rpm. The polyvinyl powder sample consists of 100 phr (parts per hundred rubber) PVC Vynova S5702, 2 phr Reatinor 804, 4.92 phr B59A K9 and 1 phr of the lubricant whose ability for external lubrication is determined.

In a preferred embodiment is provided a lubricant according to the invention, wherein the Brabender gelation time of said lubricant, as determined by the method describe above, may be above 30 s, above 40 s, above 50 s, above 60 s, above 70 s, above 80 s, above 90 s, above 100 s, above 110 s, above 120 s, above 130 s, above 140 s, above 150 s, above 160 s, above 170 s, above 180 s, above 190 s, above 200 s, above 210 s, above 220 s, above 230 s, above 240 s, above 250 s, above 260 s, above 270 s, above 280 s, above 290 s, above 300 s, above 310 s, above 320 s, above 330 s, above 340 s, above 350 s, above 360 s, above 370 s, above 380 s, above 390 s, above 400 s, above 410 s, above 420 s, above 430 s, above 440 s, above 450 s, above 460 s, above 470 s, above 480 s, above 490 s, or above 500 s. Preferably, said Brabeder gelation time of said lubricant is below 1500 s.

In the slot capillary die test, the viscosity at the wall of a slot capillary die was measured using the Rabinowitch analysis measured for a polymer resin comprising a lubricant. A lower viscosity at the wall indicates a higher ability of said lubricant for external lubrication.

In a preferred embodiment is provided a lubricant according to the invention, wherein the true viscosity at the wall, as determined by the slot capillary die test described above, may be below 3300 Pa.s, below 3250 Pa.s, below 3200 Pa.s, below 3150 Pa.s, below 3100 Pa.s, below 3050 Pa.s, below 3000 Pa.s, below 2950 Pa.s, below 2900 Pa.s, below 2850 Pa.s, below 2800 Pa.s, below 2750 Pa.s, below 2700 Pa.s, below 2650 Pa.s, below 2600 Pa.s, below 2550 Pa.s, below 2500 Pa.s, below 2450 Pa.s, below 2400 Pa.s, below 2350 Pa.s, below 2300 Pa.s, below 2250 Pa.s, below 2200 Pa.s, below 2150 Pa.s, below 2100 Pa.s, below 2050 Pa.s, below 2000 Pa.s, below 1950 Pa.s, below 1900 Pa.s, below 1850 Pa.s, below 1800 Pa.s, below 1750 Pa.s, below 1700 Pa.s, below 1650 Pa.s, below 1600 Pa.s, below 1550 Pa.s, or below 1500 Pa.s.

Example 3 provides detailed results of the Brabender gelation test and slot capillary die tests for lubricants A-G according to the invention. All lubricants according to the invention have a Brabender gelation time higher than 86 and a true viscosity at the wall, as determined by the slot capillary die test, lower than 2839 Pa.s. In other words, the lubricant according to the invention are core-shell (meth)acrylate lubricant with a good ability for external lubrication of polymer resins. Comparative lubricant H has a true viscosity at the wall of 3637 Pa.s and a Brabender gelation time of 30 s.

A lubricant according to the invention comprises a core and a shell. It is clear to the skilled person that a lubricant according to the invention may thus be described as a nanoparticle wherein a shell is disposed on or over a core, wherein said shell defines a conformal coating on or over said core, preferably wherein said shell is not covalently attached to said core, preferably wherein said shell partially or fully encapsulates said core. Such a nanoparticle may be called a core-shell nanoparticle or a core-shell lubricant in the context of this invention.

A (meth)acrylate monomer is an ester of acrylic acid (an acrylate monomer) or an ester of methacrylic acid (a methacrylate monomer). A non-limiting list of (meth)acrylate monomers comprises alkyl (meth)acrylates, alkenyl (meth)acrylates, alkynyl (meth)acrylates, aryl (meth)acrylates and heteroaryl (meth)acrylates, and their substituted analogs.

Said core comprised in a lubricant according to the invention may be obtainable by polymerization of a core composition comprising a first core (meth)acrylate monomer and a second core (meth)acrylate monomer.

Said first core (meth)acrylate monomer comprised in said core composition may be a (meth)acrylate monomer esterified to a straight or branched alkyl comprising not more than 4 carbon atoms, preferably wherein said straight or branched alkyl is selected from the group consisting of methyl, ethyl, n-propyl, isopropyl, cyclopropyl, n-butyl, isobutyl, secondary butyl, tertiary butyl and cyclobutyl. Preferably, said first core (meth)acrylate monomer is selected from the group consisting of methyl methacrylate, methyl acrylate, ethyl methacrylate and ethyl acrylate, preferably said first core (meth)acrylate monomer is methyl methacrylate (MMA).

Said second core (meth)acrylate monomer comprised in said core composition may be a (meth)acrylate monomer esterified to a straight or branched alkyl comprising at least 5 and not more than 24 carbon atoms, preferably not more than 23, 22, 21, 20, 19, 18, 17, 16, 15, 14, 13 or 12 carbon atoms. Preferably, said straight or branched alkyl is selected from the group consisting of 2-ethylhexyl, stearyl and lauryl, more preferably wherein said straight or branched alkyl is 2-ethylhexyl. Preferably, said second core (meth)acrylate monomer is selected from the group consisting of 2-ethylhexyl acrylate, stearyl methacrylate, stearyl acrylate, lauryl methacrylate, lauryl acrylate and 2-ethylhexyl methacrylate, more preferably said second core (meth)acrylate monomer is 2-ethylhexyl acrylate (2EHA).

Said core composition may comprise further core monomers, wherein said further core monomers are not limited to (meth)acrylate monomers. In other words, said polymerization may comprise the (co)polymerization of other core monomers than said first and second core (meth)acrylate monomers. Said further core monomers may include, but are not limited to acrylonitrile, methacrylonitrile, styrene (St), alphamethylstyrene, p-methylstyrene, monobromostyrene, dibromostyrene, tribromostyrene and chlorostyrene.

Said core composition comprises 5-60 weight percent of a first core (meth)acrylate monomer and 40-95 weight percent of a second core (meth)acrylate monomer.

In a preferred embodiment is provided a lubricant according to the invention, wherein said core may be obtainable by polymerization of a core composition, wherein the concentration of said first core (meth)acrylate monomer is from 5 up to 55 weight percent, from 5 up to 50 weight percent, from 5 up to 45 weight percent, from 5 up to 40 weight percent, from 5 up to 35 weight percent, from 5 up to 30 weight percent, from 5 up to 25 weight percent, from 10 up to 60 weight percent, from 10 up to 55 weight percent, from 10 up to 50 weight percent, from 10 up to 45 weight percent, from 10 up to 40 weight percent, from 10 up to 35 weight percent, from 10 up to 30 weight percent, or from 10 up to 25 weight percent.

In a preferred embodiment is provided a lubricant according to the invention, wherein said core may be obtainable by polymerization of a core composition, wherein the concentration of said second core (meth)acrylate monomer may be from 45 up to 95 weight percent, from 50 up to 95 weight percent, from 55 up to 95 weight percent, from 60 up to 95 weight percent, from 65 up to 95 weight percent, from 70 up to 95 weight percent, from 75 up to 95 weight percent, from 40 up to 90 weight percent, from 45 up to 90 weight percent, from 50 up to 90 weight percent, from 55 up to 90 weight percent, from 60 up to 90 weight percent, from 65 up to 90 weight percent, from 70 up to 90 weight percent, from 75 up to 90 weight percent.

In a preferred embodiment is provided a lubricant according to the invention, wherein said core may be obtainable by polymerization of a core composition, wherein the concentration of said first core (meth)acrylate monomer is from 5 up to 60 weight percent and the concentration of said second core (meth)acrylate monomer is from 40 up to 95 weight percent, wherein the concentration of said first core (meth)acrylate monomer is from 5 up to 45 weight percent and the concentration of said second core (meth)acrylate monomer is from 50 up to 90 weight percent, wherein the concentration of said first core (meth)acrylate monomer is from 5 up to 40 weight percent and the concentration of said second core (meth)acrylate monomer is from 50 up to 90 weight percent, wherein the concentration of said first core (meth)acrylate monomer is from 5 up to 35 weight percent and the concentration of said second core (meth)acrylate monomer is from 50 up to 90 weight percent, wherein the concentration of said first core (meth)acrylate monomer is from 5 up to 30 weight percent and the concentration of said second core (meth)acrylate monomer is from 50 up to 90 weight percent, wherein the concentration of said first core (meth)acrylate monomer is from 5 up to 25 weight percent and the concentration of said second core (meth)acrylate monomer is from 50 up to 90 weight percent, wherein the concentration of said first core (meth)acrylate monomer is from 10 up to 25 weight percent and the concentration of said second core (meth)acrylate monomer is from 50 up to 90 weight percent, wherein the concentration of said first core (meth)acrylate monomer is from 10 up to 25 weight percent and the concentration of said second core (meth)acrylate monomer is from 55 up to 90 weight percent, wherein the concentration of said first core (meth)acrylate monomer is from 10 up to 25 weight percent and the concentration of said second core (meth)acrylate monomer is from 60 up to 90 weight percent, wherein the concentration of said first core (meth)acrylate monomer is from 10 up to 25 weight percent and the concentration of said second core (meth)acrylate monomer is from 65 up to 90 weight percent, wherein the concentration of said first core (meth)acrylate monomer is from 10 up to 25 weight percent and the concentration of said second core (meth)acrylate monomer is from 70 up to 90 weight percent, or wherein the concentration of said first core (meth)acrylate monomer is from 10 up to 25 weight percent and the concentration of said second core (meth)acrylate monomer is from 75 up to 90 weight percent.

In a preferred embodiment is provided a lubricant according to the invention, wherein said core may be obtainable by polymerization of a core composition, wherein said composition comprises a third core monomer, preferably wherein the concentration of said third core monomer is from 1 up to 15 weight percent, more preferably from 1 up to 10 weight percent. In a more preferred embodiment, said third core monomer is styrene and said concentration is from 1 up to 10 weight percent.

In the context of this application, the concentration of a compound in the core composition or in the shell composition may also be interpreted as the concentration of the corresponding group or residue derived from said compound during polymerization in the core or the shell, respectively. For example, the concentration of MMA in the core composition may also be interpreted as the concentration of MMA residues in the core. In this sense, the units part per hundred rubber (phr) has been used to denote the composition of the exemplified lubricants A-J in Example 2, as is clear to the skilled person.

In Examples 1 and 2, it is shown that lubricants according to the invention may be prepared in various concentrations of the first core (meth)acrylate monomer, being methyl methacrylate (MMA), and the second core (meth)acrylate monomer, being 2-ethylhexyl acrylate (2EHA) is.

From Example 3, it can be seen that a core-shell (meth)acrylate lubricant which is not a lubricant according to the invention, i.e. lubricant H corresponding to a core composition comprising 25 weight percent 2-EHA and 75 weight percent MMA, has a lower ability for external lubrication than a lubricant according to the invention. Specifically, the Brabender gelation time of lubricant H is 30 s, whereas the Brabender gelation time for lubricants A-G according to the invention is higher than 86 s. Moreover, true viscosity at the wall, as determined by the slot capillary die test, of lubricant H is 3637 Pa.s, whereas the true viscosity at the wall for lubricants A-G according to the invention is less than 2839 Pa.s.

The specific viscosity of the core comprised in a lubricant according to the invention is defined as the ratio between the difference of the absolute viscosity of a solution of said core in a solvent and the absolute viscosity of said solvent, to the absolute viscosity of said solvent. These absolute viscosities are determined at 30°C, wherein said solvent is toluene, and the concentration of said core in said solvent is 0.4%. It is clear that the absolute viscosities are determined for the core and a solution of the core in a solvent, wherein no shell is disposed on or over said core, as defined above. The absolute viscosity of said solvent and said solution of said core in said solvent may be determined by any common technique known to the skilled person such as an Ostwald viscometer or a falling sphere viscometer. Preferably, the specific viscosity of the core comprised in a lubricant according to the invention is equal to or lower than 0.200, 0.195, 0.190, 0.185, 0.180, 0.175, 0.170, 0.165, 0.160, 0.155, 0.150, 0.145, 0.140, 0.135, 0.130, 0.125, 0.120, 0.115, 0.110, 0.105, 0.100, 0.095, 0.090, 0.085, 0.080, 0.075, 0.070, 0.065, 0.060, 0.055, or 0.050.

Without being bound to this theory, the specific viscosity of the shell comprised in a lubricant according to the invention may also be used as an indirect measure for the ability of said lubricant according to the invention for external lubrication of a polymer resin.

In Example 3, it is shown that lubricants according to the invention A-G have a specific viscosity lower than 0.05.

Said shell, comprised in a lubricant according to the invention, may comprise one or more layers obtainable by polymerization of a shell composition, wherein said shell composition comprises a crosslinking agent. Herein, it is understood that each of said one or more layers may be obtained by a separate polymerization of a separate shell composition. In the context of this application, any preferred embodiments relating to the composition of the shell composition, should be interpreted in such a way as relating to the average composition over said shell compositions used in said separate polymerizations, unless explicitly mentioned otherwise. For example, lubricant B as described in Example 2 corresponds to a shell composition comprising 85.0 weight percent MMA, 15.0 weight percent BA and 0.75 weight percent allyl methacrylate (crosslinking agent). The shell of lubricant B has four layers, each prepared via a separate polymerization of a separate shell composition. These four shell compositions have the same MMA and BA concentration, simply referred to as the concentration of these compounds in the shell composition. The concentration of allyl methacrylate differs per shell layer, however, and the concentration of the shell composition is taken as the average allyl methacrylate concentration.

In a preferred embodiment is provided a lubricant according to the invention, wherein said shell may comprise one or more layers obtainable by polymerization of a shell composition, wherein said shell composition comprises a (meth) acrylate monomer. Preferably, the concentration of (meth)acrylate monomers in said shell composition is at least 5, at least 10, at least 15, at least 20, at least 25, at least 30, at least 35, at least 40, at least 45, at least 50, at least 55, at least 60, at least 65, at least 70, at least 75, at least 80, at least 85, at least 90, or at least 95 weight percent.

In another preferred embodiment is provided a lubricant according to the invention, wherein said shell may comprise one or more layers obtainable by polymerization of a shell composition, wherein said shell composition comprises a first shell (meth)acrylate monomer.

In a preferred embodiment is provided a lubricant according to the invention, wherein said shell may comprise one or more layers obtainable by polymerization of a shell composition, wherein said shell composition comprises a first shell (meth)acrylate monomer, wherein the concentration of said first shell (meth)acrylate monomer in said shell composition is from 50 weight percent up to 100 weight percent, from 55 weight percent up to 100 weight percent, from 60 weight percent up to 100 weight percent, from 65 weight percent up to 100 weight percent, from 70 weight percent up to 100 weight percent, from 75 weight percent up to 100 weight percent, or from 80 weight percent up to 100 weight percent, from 50 weight percent up to 95 weight percent, from 55 weight percent up to 95 weight percent, from 60 weight percent up to 95 weight percent, from 65 weight percent up to 96 weight percent, from 70 weight percent up to 95 weight percent, from 75 weight percent up to 95 weight percent, or from 80 weight percent up to 95 weight percent.

In a preferred embodiment is provided a lubricant according to the invention, wherein said shell may comprise one or more layers obtainable by polymerization of a shell composition, wherein said shell composition comprises a first shell (meth)acrylate monomer and a second shell (meth)acrylate monomer.

In a preferred embodiment is provided a lubricant according to the invention, wherein said shell may comprise one or more layers obtainable by polymerization of a shell composition, wherein said shell composition comprises a first shell (meth)acrylate monomer and a second shell (meth)acrylate monomer, wherein the concentration of said first shell (meth)acrylate monomer in said shell composition is from 50 weight percent up to 100 weight percent, from 55 weight percent up to 100 weight percent, from 60 weight percent up to 100 weight percent, from 65 weight percent up to 100 weight percent, from 70 weight percent up to 100 weight percent, from 75 weight percent up to 100 weight percent, or from 80 weight percent up to 100 weight percent, from 50 weight percent up to 95 weight percent, from 55 weight percent up to 95 weight percent, from 60 weight percent up to 95 weight percent, from 65 weight percent up to 95 weight percent, from 70 weight percent up to 95 weight percent, from 75 weight percent up to 95 weight percent, or from 80 weight percent up to 95 weight percent. Preferably, the concentration of said first shell (meth)acrylate monomer in said shell composition is from 75 weight percent up to 95 weight percent, and the concentration of said second shell (meth)acrylate monomer in said shell composition is from 5 weight percent up to 25 weight percent.

Preferably, said first shell (meth)acrylate monomer comprised in a shell composition is a (meth)acrylate monomer esterified to a straight or branched alkyl comprising not more than 4 carbon atoms, preferably wherein said straight or branched alkyl is selected from the group consisting of methyl, ethyl, n-propyl, isopropyl, cyclopropyl, n-butyl, isobutyl, secondary butyl, tertiary butyl and cyclobutyl. More preferably, said first shell (meth)acrylate monomer is selected from the group consisting of methyl methacrylate, methyl acrylate, ethyl methacrylate and ethyl acrylate. Most preferably said first shell (meth)acrylate monomer is methyl methacrylate (MMA).

Preferably, said second shell (meth)acrylate monomer comprised in a shell composition is a (meth)acrylate monomer esterified to a straight or branched alkyl comprising at least 3 and not more than 12 carbon atoms, preferably not more than 11, 10, 9, 8, 7, 6, 5 or 4 carbon atoms. More preferably, said second shell (meth)acrylate monomer is selected from the group consisting of n-propyl acrylate, isopropyl acrylate, cyclopropyl acrylate, n-butyl acrylate, isobutyl acrylate, secondary butyl acrylate, tertiary butyl acrylate, cyclobutyl acrylate, n-pentyl acrylate, isopentyl acrylate, neopentyl acrylate, tertiary pentyl acrylate and secondary pentyl acrylate. Most preferably, said second shell (meth)acrylate monomer is butyl acrylate (BA).

In a embodiment is provided a lubricant according to the invention, wherein said shell comprises one or more layers obtainable by polymerization of a shell composition, wherein said shell composition comprises a crosslinking agent. Preferably, said crosslinking agent is selected from the group consisting of acrylates, methacrylates, diacrylates, triacrylates, vinyl cross-linkers such as divinyl benzene and allyl cross-linkers such as triallyl isocyanurate, more preferably said crosslinking agent is allyl methacrylate (ALMA). Preferably, the concentration of said crosslinking agent in said shell composition is from 0.0 mol% up to 2.0 mol%, from 0.0 mol% up to 1.9 mol%, from 0.0 mol% up to 1.8 mol%, from 0.0 mol% up to 1.7 mol%, from 0.0 mol% up to 1.6 mol%, from 0.0 mol% up to 1.5 mol%, from 0.0 mol% up to 1.4 mol%, from 0.0 mol% up to 1.3 mol%, from 0.0 mol% up to 1.2 mol%, from 0.0 mol% up to 1.1 mol%, from 0.0 mol% up to 1.0 mol%, from 0.1 mol% up to 2.0 mol%, from 0.1 mol% up to 1.9 mol%, from 0.1 mol% up to 1.8 mol%, from 0.1 mol% up to 1.7 mol%, from 0.1 mol% up to 1.6 mol%, from 0.1 mol% up to 1.5 mol%, from 0.1 mol% up to 1.4 mol%, from 0.1 mol% up to 1.3 mol%, from 0.1 mol% up to 1.2 mol%, from 0.1 mol% up to 1.1 mol%, from 0.1 mol% up to 1.0 mol%, from 0.5 mol% up to 2.0 mol%, from 0.5 mol% up to 1.9 mol%, from 0.5 mol% up to 1.8 mol%, from 0.5 mol% up to 1.7 mol%, from 0.5 mol% up to 1.6 mol%, from 0.5 mol% up to 1.5 mol%, from 0.5 mol% up to 1.4 mol%, from 0.5 mol% up to 1.3 mol%, from 0.5 mol% up to 1.2 mol%, from 0.5 mol% up to 1.1 mol%, or from 0.5 mol% up to 1.0 mol% .

In Example 2, the use of allyl methacrylate (ALMA) as a crosslinking agent is shown in lubricants A-E and G according to the invention.

In Example 3 it is further shown that the presence of a crosslinking agent in lubricants A-E and G according to the invention may lead to an increased ability for external lubrication of polymer resins, compared to lubricant F according to the invention, which does not comprise a crosslinking agent.

The shell comprised in a lubricant according to the invention has a glass transition temperature from 60°C to 120°C. The glass transition temperature may be determined by any common technique known to the skilled person such as thermomechanical analysis, dynamic mechanical analysis and differential scanning calorimetry. Preferably, the glass transition temperature of the shell comprised in a lubricant according to the invention is from 65°C to 120°C, from 70°C to 120°C, from 75°C to 120°C, from 80°C to 120°C, from 85°C to 120°C.

It is well known to the skilled person that nanoparticles comprising a core and a shell, wherein said core and said shell are obtainable by polymerization of a core composition and a shell composition, respectively, may be manufactured by means of an emulsion polymerization, followed by a subsequent spray-drying.

In a preferred embodiment is provided a lubricant according to the invention, wherein the shell comprised in said lubricant comprises two or more layers, three or more layers, four or more layers, from two up to eight layers, from two up to six layers, or from two up to four layers. In a related preferred embodiment, said shell consists of 2, 3, 4, 5, 6, 7, 8, 9 or 10 layers, more preferably wherein said shell consists of 2, 3, 4, 5 or 6 layers.

The ratio of the mass of the core to the mass of the shell comprised in a lubricant according to the invention is from 30/70 up to 90/10. Preferably, the mass of the core to the mass of the shell comprised in a lubricant according to the invention is from 35/65 up to 90/10, from 40/60 up to 90/10, from 45/60 up to 90/10, from 50/50 up to 90/10, from 30/70 up to 85/15, from 35/65 up to 85/15, from 40/60 up to 85/15, from 45/60 up to 85/15, from 50/50 up to 85/15, from 30/70 up to 80/20, from 35/65 up to 80/20, from 40/60 up to 80/20, from 45/60 up to 80/20, from 50/50 up to 80/20, from 30/70 up to 75/25, from 35/65 up to 75/25, from 40/60 up to 75/25, from 45/60 up to 75/25, from 50/50 up to 75/25, from 30/70 up to 70/30, from 35/65 up to 70/30, from 40/60 up to 70/30, from 45/60 up to 70/30, or from 50/50 up to 70/30.

In a preferred embodiment is provided a lubricant according to the invention, wherein said lubricant is a foaming powder, preferably a free-flowing powder. Preferably, a free-flowing powder means a powder characterized by a repose angle equal or lower than 40°, than 37.5°, than 35°, than 32.5°, than 30°, than 27.5°, than 25°, than 22.5°, than 20°, than 17.5°, or than 15°. Alternatively, a free-flowing powder is preferably defined by a qualitative visual inspection of the powder flow in a funnel, wherein a steady, fast flow is identified with a free-flowing powder.

In a preferred embodiment is provided a lubricant according to the invention, wherein said lubricant may be a powder, wherein said powder is not prone to powder caking, preferably wherein said powder is a free-flowing powder, as defined above.

The flowing character of a powder may also be assessed via the powder funnel flow test, which is described in Example 1.

In a preferred embodiment is provided a lubricant according to the invention, wherein said lubricant has a powder funnel flow time less than 30s, 29s, 28s, 27s, 26s, 25s, 24s, 23s, 22s, 21s, 20s, 19s, 18s, 17s, 16s, 15s, 14s, 13s, 12s, 11s, 10s, 9s, 8s, 7s, 6s, 5s, as determined by the protocol described in Example 1.

In a preferred embodiment is provided a lubricant according to the invention, wherein said lubricant has less than 15, 14, 13, 12, 11, 10, 9, 8, 7, 6, 5, 4, 3, 2, or 1 hits after a powder funnel flow test, as determined by the protocol described in Example 1.

In a preferred embodiment is provided a lubricant according to the invention, wherein said lubricant has a powder funnel flow time less than 25s and less than 15 hits after a powder funnel flow test, or a powder funnel flow time less than 10s and less than 5 hits after a powder funnel flow test, or a powder funnel time less than 5s without hits after a powder funnel flow test, as determined by the protocol described in Example 1.

A lubricant according to the invention may have a shape not inconsistent with the objectives of the present disclosure. In some embodiments, the cores have a spherical shape, a faceted or polyhedral shape, a rod shape, or a plate or disc shape. In preferred embodiments, the cores have a spherical shape. A lubricant according to the invention described herein may also comprise a mixture of particle shapes in certain embodiments.

A lubricant according to the invention is preferably stable under the conditions wherein it functions as a lubricant. Preferably, a lubricant according to the invention does not vaporize, or substantially physically or chemically degrade around the melting temperature of a thermoplastic polymer, more preferably around the melting temperature of polyvinyl chloride, most preferably from 140°C up to 220°C. Substantial degradation means not more than 5 percent degradation by weight.

*Compositions*

The invention provides a composition comprising a lubricant and a polymer, wherein the polymer is polyvinyl chloride.

In a preferred embodiment is provided a composition according to the invention may be a polymer resin, wherein said lubricant according to the invention functions as an internal and/or an external lubricant, preferably as an external lubricant. Said polymer resin is a resin of a thermoplastic polymer, said thermoplastic polymer is polyvinyl chloride. Preferably, said polymer resin comprises a plasticizer, a filler, an extender, a stabilizer, an impact modifier, a pigment, an antioxidant, a thickener and/or a flame retardant.

*Methods for lubrication*

In a third aspect, the invention provides a method for external lubrication of a polymer which may comprise contacting said polymer with a lubricant according to the invention, preferably wherein said polymer is a thermoplastic, more preferably wherein said polymer is polyvinyl chloride. All preferred aspects above relating to a lubricant according to the invention may be applied mutatis mutandis to these methods for external lubrication of a polymer.

*Methods for manufacturing lubricant and compositions*

In a fourth aspect, the disclosure provides a method for manufacturing a lubricant or a composition according to the invention. All preferred aspects above relating to a composition according to the invention may be applied mutatis mutandis to methods for manufacturing such a lubricant or such a composition.

Preferably, a method for manufacturing a lubricant or a composition according to the invention may comprise an emulsion polymerization, followed by a spray-drying.

**Definitions**

Each embodiment as identified herein may be combined together unless otherwise indicated.

In this document and in its claims, the verb "to comprise" and its conjugations is used in its non-limiting sense to mean that items following the word are included, but items not specifically mentioned are not excluded. In addition, the verb "to consist" may be replaced by "to consist essentially of" meaning that a method as defined herein may comprise additional steps or component(s) than the ones specifically identified, said additional component(s) not altering the unique characteristic of the invention. In addition, reference to an element by the indefinite article "a" or "an" does not exclude the possibility that more than one of the element is present, unless the context clearly requires that there be one and only one of the elements. The indefinite article "a" or "an" thus usually means "at least one".

In the context of this invention, a decrease or increase of a parameter to be assessed means a change of at least 5% of the value corresponding to that parameter. More preferably, a decrease or increase of the value means a change of at least 10%, even more preferably at least 20%, at least 30%, at least 40%, at least 50%, at least 70%, at least 90%, or 100%. In this latter case, it can be the case that there is no longer a detectable value associated with the parameter.

Wherever a list of numbers is provided like "at least X, Y, or Z" and "less than X%, Y%, Z%", such statements should be interpreted as "at least X, or at least Y, or at least Z" and "less than X%, or less than Y%, or less than Z%", respectively.

The word "about" or "approximately" when used in association with a numerical value (e.g. about 10) preferably means that the value may be the given value (of 10) more or less 1% of the value.

The proposition "between" when used in association with integers refers to a range including the boundary values mentioned. For example, if n is a value between 1 and 3, n may be 1, 2 or 3. In other words, "between X and Y" is a synonym of "from X up to Y".

**Examples**

The following examples are offered for illustrative purposes.

*Example 1: Experimental procedures*

*Polymerization of compounds A-I*

The polymerizations of compounds A to I, as exemplified in this application, were carried out in a 5 liter glass reactor, equipped with a mechanical stirrer, a condenser, a thermocouple, a nitrogen inlet, a monomer feed line and a temperature-controlled water bath.

The reactor was charged with deionized water (180phr), sodium carbonate (0.05phr), sodium dodecyl benzene sulfonate (0.15phr) and heated to 85°C while flushing with nitrogen. At 85°C, ethylenediaminetetraacetic acid (0.008phr), iron(II) sulfate (0.002phr) and sodium formaldehyde sulfoxylate (0.15phr) were added to the reactor. The reaction was initiated by adding tertiary butyl hydroperoxide (0.02phr) and by starting the addition of the monomer emulsion. The monomer emulsion forming the core of the lubricant comprises of MMA (see table below for composition), 2-EHA (see table below for composition), tertiary dodecyl mercaptan (2.0phr), sodium dodecyl benzene sulfonate (2.0phr) and deionized water (50phr). The monomer emulsion was fed to the reaction mixture over a period of 150 minutes together with tertiary butyl hydroperoxide which was added every 10 minutes (0.28phr in total). After the monomer emulsion dosing, the reaction mixture was held at 85°C for 30 minutes. Next, the reaction mixture was cooled down to 50°C and extra sodium formaldehyde sulfoxylate (0.02phr) was added to the reaction mixture.

The polymerization of the shell layers was performed at 50°C. For each layer of the shell, the monomer mixture, comprising MMA, BA and allyl methacrylate (see table below for composition), was added to the reactor in 30 min for layer 1 and in 17 minutes for layers 2, 3 and 4. The polymerization of each layer was initiated after the monomer dosing by adding potassium persulfate (0.01phr) while maintaining the reaction mixture at 50°C for 30 minutes. After the polymerization of the last layer, sodium formaldehyde sulfoxylate (0.06phr) and tertiary butyl hydroperoxide (0.06phr) were added in the after polymerization at 50°C for another 45 minutes. Hereafter, the final latex was cooled down.

The final latex was treated in a spray drying installation (GEA Niro Production Minor™ spray dryer, co-current rotary atomization) to obtain the final powder. The inlet temperature was set at 135°C and the outlet temperature was kept at approximately 60°C. The pumping speed of the latex was set at 20 liter per hour, while the atomizer wheel (FS1, 4-100) rotates at 17000 rpm. The dried powders were sieved over a 35 mesh sieve.

*Polymerization of compound J*

This polymerization of compound J, as exemplified in this application, was carried out in the same glass reactor as described above. A monomer emulsion was prepared in a separate vessel by mixing deionized water (80phr), dioctyl sodium sulfosuccinate (1.5phr), stearyl methacrylate (SMA) (65phr) and MMA (15phr). This mixture was force-emulsified using a homogenizer. The reactor was charged with deionize water (67phr), ethylenediaminetetraacetic acid (0.04phr), iron(II) sulfate (0.01phr) and sodium formaldehyde sulfoxylate (0.2phr) and the prepared monomer emulsion. Then the reactor was heated to 70°C while flushing with nitrogen. The reaction was initiated by adding tertiary butyl hydroperoxide (0.01phr) and the reaction mixture was maintained at 70°C for 4h.

For the shell layer, MMA (20phr) was bubbled with nitrogen for 10 minutes and fed to the reactor over a period of 60 minutes. Tertiary butyl hydroperoxide (0.1phr) was also fed into the reactor over a period of 60 minutes. After the dosing, the reaction mixture was left mixing at 70°C for 2h.

The polymer latex was coagulated using sulfuric acid, washed with deionized water and dried at 50°C. The dried powders were sieved over a 35 mesh sieve.

*Glass transition temperature*

The glass transition temperature ($T_g$) of the shell is estimated/calculated by multiplying the mass fraction of the monomer with its corresponding $T_g$ (= $T_g$ of the pure polymer consisting of only the monomer; poly MMA = 105°C, poly BA = -53°C, poly St = 100°C). The crosslinking degree is not taken into account in this calculation. The value was calculated by an equation below;

$$T_g = [ (T_{gMMA} * phr_{MMA}) + (T_{gBA} * phr_{BA}) + (T_{gST} * phr_{ST}) ] / [ phr_{MMA} + phr_{BA} + phr_{ST}]$$

$T_{gX}$: glass transition temperature of polymer comprised of monomer X

$phr_X$: mass fraction of monomer X in total polymer composition

*Powder funnel flow*

The powder funnel flow is tested by measuring the flow time of the powder (=time to empty the funnel through the narrow opening). 100g of powder is loaded into a conical, stainless steel funnel (half-angle of 45°) with an opening of 20mm at the bottom, closed off by a removable metallic plate. The time is measured, in seconds, to empty the funnel through the opening, by removing the metallic plate. If the powder does not flow, the flowing of the powder is aided by gently hitting the funnel with the metallic plate. The number of hits is also taken into account in the evaluation.

*Specific viscosity*

The specific viscosity is measured using the Automated Relative Viscometer (ARV™) System (Relatieve viscometer Y501C (Viscotek), microlab 500series dosing device, Julabo F12 temperature recirculating bath, autosampler, mass balance Mettler XS201). The lubricant is diluted in toluene (0.3984 g/dl) and mixed for 1 hour 30 minutes at 30°C before measuring.

*Hot blending*

The Brabended gelation test and slot capillary die test are performed herein for the exemplified lubricants A-J in a polyvinyl chloride formulation. This polymer resin containing a lubricant was prepared by hot blending in a hot cold mixer (Papenmeier TGEHK 20 laboratory PVC compound mixer, 2300rpm) up to 115°C followed by a rapid cooling. The formulation was composed of 100phr Vynova™ S5702 (Vynova group); 2phr Reatinor 804 (Reagens); 4.92phr Kane Ace™ B58A (Kaneka) and 1 phr lubricant.

*Brabender gelation test*

The polymer resin containing a lubricant was processed in the Brabender Plasticorder PL 2000 with roller mixing blades to determine the Brabender gelation time. The brabender mixer was filled with 47g of hot blend, with an initial chamber wall temperature of 145°C and a rotor speed of 30 rpm. The torque of the rotors was recorded in function of time. The gelation time, expressed in seconds, was the time needed to achieve maximum torque (point $t_x$) of the polymer resin (= measure of how fast a PVC polymer resin is gelating).

*Slot capillary die*

The true viscosity at the wall of the polymer resin containing a lubricant was determined using the Haake extruder (Rheomex TW100 conical twin screw) equipped with a slot die (dimensions: 200 x 2 x 20 mm). The die was equipped with a temperature sensor to measure the melt temperature and two pressure sensors to measure the pressure of the melt at different positions within the slot. The measurements are run at 30 and 40 rpm with the heating zones (4 zones) set at, respectively, 150, 180, 192 and 185°C, to obtain a melt temperature of 190°C. The pressures and temperatures are collected during the run and the output is determined over a 2 minutes run by manually weighing the melt on a mass balance.

The true viscosity at the wall is calculated based on the following equations (Reference: Son Y., Polymer 48 (2007) 632-637):

$$\tau_W = \frac{H}{2}\left(\frac{\Delta P}{L}\right)$$

$$\dot{\gamma}_W = \frac{2n+1}{3n}\left(\frac{6Q}{WH^2}\right) = \frac{2n+1}{3n}\dot{\gamma}_a \quad with \; n = \frac{d(\ln \tau_W)}{d(\ln \dot{\gamma}_a)} = \frac{d(\ln \Delta P)}{d(\ln Q)}$$

$$\eta_w = \frac{\tau_W}{\dot{\gamma}_W}$$

In which

*H* = height of slot [m]

*L* = length of slot [m]

*W* = width of slot [m]

$\Delta P$ = pressure drop along the slot [Pa]

*Q* = volumetric flow rate [m³ s⁻¹]

$\tau_W$ = shear stress at the wall [Pa]

$\dot{\gamma}_W$ = shear rate for a non-Newtonian fluid at the wall [s⁻¹]

$\dot{\gamma}_a$ = apparent shear rate at the wall (= wall shear rate of Newtonian fluid) [s⁻¹]

$\eta_w$ = viscosity for a non-Newtonian fluid at the wall (= true viscosity at the wall) [Pa s]

### *Example 2: Lubricant compositions*

Several lubricants according to the invention A-G have been prepared. Their composition is described below. Lubricants H, I and J are incorporated for reference and comparison and should not be considered lubricants according to the invention.

|  | Core composition (phr) | | | | Shell composition (phr) | | | |
|---|---|---|---|---|---|---|---|---|
|  | MMA | 2-EHA | SMA | St | MMA | BA | St | ALMA |
| A | 5.00 | 45.00 | 0.00 | 0.00 | 42.5 | 7.5 | 0.00 | 0.375 |
| B | 12.5 | 37.5 | 0.00 | 0.00 | 42.5 | 7.5 | 0.00 | 0.375 |
| C | 12.5 | 37.5 | 0.00 | 0.00 | 42.5 | 7.5 | 0.00 | 0.625 |
| D | 17.5 | 52.5 | 0.00 | 0.00 | 25.5 | 4.5 | 0.00 | 0.375 |
| E | 17.5 | 52.5 | 0.00 | 0.00 | 21.25 | 7.5 | 21.25 | 0.375 |
| F | 17.5 | 52.5 | 0.00 | 0.00 | 21.25 | 7.5 | 21.25 | 0.000 |
| G | 9.375 | 37.5 | 0.00 | 3.125 | 42.5 | 7.5 | 0.00 | 0.375 |
| H | 37.5 | 12.5 | 0.00 | 0.00 | 42.5 | 7.5 | 0.00 | 0.375 |
| I | 23.75 | 71.25 | 0.00 | 0.00 | 4.25 | 0.75 | 0.00 | 0.038 |
| J | 15.00 | 0.00 | 65 | 0.00 | 20.00 | 0.00 | 0.00 | 0.000 |

|  | Core | | | | Shell | | | | | | Core /shell |
|---|---|---|---|---|---|---|---|---|---|---|---|
|  | Composition (wt%) | | | | Composition (wt%) | | | | ALMA (mol%) | T_g (°C) | |
|  | MMA | 2-EHA | SMA | St | MMA | BA | St | ALMA | | | |
| A | 10.00 | 90.00 | 0.00 | 0.00 | 85.00 | 15.0 | 0.0 | 0.75 | 0.62 | 81.3 | 50:50 |
| B | 25.00 | 75.00 | 0.00 | 0.00 | 85.00 | 15.0 | 0.0 | 0.75 | 0.62 | 81.3 | 50:50 |
| C | 25.00 | 75.00 | 0.00 | 0.00 | 85.00 | 15.0 | 0.0 | 1.25 | 1.03 | 81.3 | 50:50 |
| D | 25.00 | 75.00 | 0.00 | 0.00 | 85.00 | 15.0 | 0.0 | 1.25 | 1.03 | 81.3 | 70:30 |
| E | 25.00 | 75.00 | 0.00 | 0.00 | 42.50 | 15.0 | 42.5 | 0.75 | 0.62 | 79.2 | 50:50 |
| F | 25.00 | 75.00 | 0.00 | 0.00 | 42.50 | 15.0 | 42.5 | 0.00 | 0.00 | 79.2 | 50:50 |
| G | 18.75 | 75.00 | 0.00 | 6.25 | 85.00 | 15.0 | 0.0 | 0.75 | 0.62 | 81.3 | 50:50 |
| H | 75.00 | 25.00 | 0.00 | 0.00 | 85.00 | 15.0 | 0.0 | 0.75 | 0.62 | 81.3 | 50:50 |
| I | 25.00 | 75.00 | 0.00 | 0.00 | 85.00 | 15.0 | 0.0 | 0.75 | 0.62 | 81.3 | 95:50 |

(continued)

| | Core | | | | Shell | | | | ALMA (mol%) | $T_g$ (°C) | Core /shell |
|---|---|---|---|---|---|---|---|---|---|---|---|
| | Composition (wt%) | | | | Composition (wt%) | | | | | | |
| | MMA | 2-EHA | SMA | St | MMA | BA | St | ALMA | | | |
| J | 18.75 | 0.00 | 81.25 | 0.00 | 100.0 | 0.0 | 0.0 | 0.00 | 0.00 | 105.0 | 80:20 |

***Example 3: External lubrication and powder properties***

| | Specific viscosity | Slot capillary die wall η [Pas] | Powder | Powder funnel flow | | Brabender gelation time (s) |
|---|---|---|---|---|---|---|
| | | | | Time (s) | Number of hits | |
| A | 0.03 | 2710 | Yes | 20 | 10 | 326 |
| B | 0.03 | 2382 | Yes | 4 | 1 | 138 |
| C | 0.03 | 2580 | Yes | 4 | 1 | 152 |
| D | 0.03 | 2138 | Yes | no powder flow | | 594 |
| E | 0.03 | 2839 | Yes | no powder flow | | 164 |
| F | 0.03 | 2492 | Yes | no powder flow | | 86 |
| G | 0.03 | 2657 | Yes | 4 | 0 | 126 |
| H | 0.03 | 3637 | Yes | 4 | 0 | 30 |
| I | 0.03 | No data | No | | | |
| J | | No data | No | | | |

## Claims

1. A composition comprising a lubricant and polyvinylchloride wherein the lubricant is a lubricant for polyvinyl chloride comprising a core and a shell,

   wherein said core is obtainable by polymerization of a core composition, wherein said core composition comprises 5-60 weight percent of a first core (meth)acrylate monomer and 40-95 weight percent of a second core (meth)acrylate monomer, wherein said first core (meth)acrylate monomer is esterified to a straight or branched alkyl comprising not more than 4 carbon atoms, wherein said second core (meth)acrylate monomer is esterified to a straight or branched alkyl comprising at least 5 and not more than 24 carbon atoms;
   wherein said shell comprises one or more layers obtainable by polymerization of a shell composition, wherein said shell composition comprises a crosslinking agent;
   wherein said shell has a glass transition temperature from 60°C to 120°C,
   wherein said glass transition temperature is determined by thermomechanical analysis;
   wherein the ratio of the mass of said core to the mass of said shell is from 30/70 to 90/10.

2. A composition according to claim 1, wherein said core composition comprises 55-95 weight percent of said second core (meth)acrylate monomer.

3. A composition according to claim 1 or claim 2, wherein said ratio of the mass of said core to the mass of said shell is from 50/50 to 90/10, preferably from 50/50 to 70/30.

4. A composition according to any one of claims 1 to 3, wherein said first core (meth)acrylate monomer is selected from the group consisting of methyl methacrylate, methyl acrylate, ethyl methacrylate and ethyl acrylate, preferably wherein said first core (meth)acrylate monomer is methyl methacrylate.

5. A composition according to any one of claims 1 to 4, wherein said second core (meth)acrylate monomer is esterified to a straight or branched alkyl comprising at least 5 and not more than 18 carbon atoms, preferably wherein said second core (meth)acrylate monomer is selected from the group consisting of 2-ethylhexyl acrylate, stearyl methacrylate, stearyl acrylate, lauryl methacrylate, lauryl acrylate and 2-ethylhexyl methacrylate, more preferably wherein said second core (meth)acrylate monomer is 2-ethylhexyl acrylate.

6. A composition according to any one of claims 1 to 5, wherein said crosslinking agent is allyl methacrylate (ALMA).

7. A composition according to claim 6, wherein the concentration of said crosslinking agent in said shell composition is from 0.1 mol% up to 2.0 mol%, preferably from 0.5 mol% up to 1.5 mol%.

8. A composition according to any one of claims 1 to 7, wherein said shell composition comprises 50-100 weight percent of a first shell (meth)acrylate monomer, wherein said first shell (meth)acrylate monomer is a (meth)acrylate monomer esterified to a straight or branched alkyl comprising not more than 4 carbon atoms.

9. A composition according to any one of claims 1 to 8, wherein said specific viscosity of said core is equal to or lower than 0.20, preferably equal to or lower than 0.18, more preferably equal to or lower than 0.15, wherein said specific viscosity is determined at a concentration of 0.4% in toluene at 30°C.

10. A composition according to any one of claims 1 to 9 wherein said core composition comprises 5-60 weight percent of the first core (meth)acrylate monomer and 40-75 weight percent of the second core (meth)acrylate monomer.

11. A method for external lubrication of polyvinylchloride comprising contacting polyvinylchloride with a lubricant as described in any one of claims 1 to 10.

**Patentansprüche**

1. Zusammensetzung, umfassend ein Schmiermittel und Polyvinylchlorid, wobei das Schmiermittel ein Schmiermittel für Polyvinylchlorid ist, umfassend einen Kern und eine Hülle,

wobei der Kern durch Polymerisation einer Kernzusammensetzung erhältlich ist, wobei die Kernzusammensetzung 5-60 Gewichtsprozent eines ersten Kern(meth)acrylatmonomers und 40-95 Gewichtsprozent eines zweiten Kern(meth)acrylatmonomers umfasst, wobei das erste Kern(meth)acrylatmonomer mit einem geradkettigen oder verzweigten Alkyl umfassend nicht mehr als 4 Kohlenstoffatome verestert ist, wobei das zweite Kern(meth)acrylatmonomer mit einem geradkettigen oder verzweigten Alkyl umfassend mindestens 5 und nicht mehr als 24 Kohlenstoffatome verestert ist;
wobei die Hülle eine oder mehrere Schichten umfasst, die durch Polymerisation einer Hüllenzusammensetzung erhältlich sind, wobei die Hüllenzusammensetzung ein Vernetzungsmittel umfasst;
wobei die Hülle eine Glasübergangstemperatur von 60 °C bis 120 °C aufweist,
wobei die Glasübergangstemperatur durch thermomechanische Analyse bestimmt wird;
wobei das Verhältnis der Masse des Kerns zu der Masse der Hülle 30/70 bis 90/10 beträgt.

2. Zusammensetzung nach Anspruch 1, wobei die Kernzusammensetzung 55-95 Gewichtsprozent des zweiten Kern-(meth)acrylatmonomers umfasst.

3. Zusammensetzung nach Anspruch 1 oder Anspruch 2, wobei das Verhältnis der Masse des Kerns zu der Masse der Hülle 50/50 bis 90/10, vorzugsweise 50/50 bis 70/30 beträgt.

4. Zusammensetzung nach einem der Ansprüche 1 bis 3, wobei das erste Kern(meth)acrylatmonomer ausgewählt ist aus der Gruppe bestehend aus Methylmethacrylat, Methylacrylat, Ethylmethacrylat und Ethylacrylat, wobei das erste Kern(meth)acrylatmonomer vorzugsweise Methylmethacrylat ist.

5. Zusammensetzung nach einem der Ansprüche 1 bis 4, wobei das zweite Kern(meth)acrylatmonomer mit einem geradkettigen oder verzweigten Alkyl umfassend mindestens 5 und nicht mehr als 18 Kohlenstoffatome verestert ist, wobei das zweite Kern(meth)acrylatmonomer vorzugsweise aus der Gruppe ausgewählt ist, die aus 2-Ethylhexylacrylat, Stearylmethacrylat, Stearylacrylat, Laurylmethacrylat, Laurylacrylat und 2-Ethylhexylmethacrylat ausgewählt ist, wobei das zweite Kern(meth)acrylatmonomer vorzugsweise 2-Ethylhexylacrylat ist.

6. Zusammensetzung nach einem der Ansprüche 1 bis 5, wobei das Vernetzungsmittel Allylmethacrylat (ALMA) ist.

7. Zusammensetzung nach Anspruch 6, wobei die Konzentration des Vernetzungs-mittels in der Hüllenzusammensetzung 0,1 Mol-% bis 2,0 Mol%, vorzugsweise 0,5 Mol-% bis 1,5 Mol%, beträgt.

8. Zusammensetzung nach einem der Ansprüche 1 bis 7, wobei die Hüllenzusammensetzung 50-100 Gewichtsprozent eines ersten Hüllen(meth)acrylatmonomers umfasst, wobei das erste Hüllen(meth)acrylatmonomer ein (Meth) acrylatmonomer ist, das mit einem geradkettigen oder verzweigten Alkyl umfassend nicht mehr als 4 Kohlenstoff-atome verestert ist.

9. Zusammensetzung nach einem der Ansprüche 1 bis 8, wobei die spezifische Viskosität des Kerns gleich oder kleiner als 0,20 ist, vorzugsweise gleich oder kleiner als 0,18, bevorzugter gleich oder kleiner als 0,15, wobei die spezifische Viskosität bei einer Konzentration von 0,4 % in Toluol bei 30 °C bestimmt wird.

10. Zusammensetzung nach einem der Ansprüche 1 bis 9, wobei die Kernzusammensetzung 5-60 Gewichtsprozent des ersten Kern(meth)acrylatmonomers und 40-75 Gewichtsprozent des zweiten Kern(meth)acrylatmonomers umfasst.

11. Verfahren zur äußeren Schmierung von Polyvinylchlorid, umfassend das Kontaktieren von Polyvinylchlorid mit einem Schmiermittel, wie in einem der Ansprüche 1 bis 10 beschrieben.

## Revendications

1. Composition comprenant un lubrifiant et du chlorure de polyvinyle, où le lubrifiant est un lubrifiant pour chlorure de polyvinyle comprenant un noyau et une enveloppe,

où ledit noyau peut être obtenu par polymérisation d'une composition de noyau, où ladite composition de noyau comprend 5 à 60 % en poids d'un premier monomère (méth)acrylate de noyau et 40 à 95 % en poids d'un deuxième monomère (méth)acrylate de noyau, où ledit premier monomère (méth)acrylate de noyau est estérifié à un alkyle linéaire ou ramifié ne comprenant pas plus de 4 atomes de carbone, où ledit deuxième monomère (méth)acrylate de noyau est estérifié à un alkyle linéaire ou ramifié comprenant au moins 5 et pas plus de 24 atomes de carbone ;
où ladite enveloppe comprend une ou plusieurs couches qui peuvent être obtenues par polymérisation d'une composition d'enveloppe, où ladite composition d'enveloppe comprend un agent de réticulation ;
où ladite enveloppe a une température de transition vitreuse comprise entre 60 °C et 120 °C,
où ladite température de transition vitreuse est déterminée par analyse thermomécanique ;
où le rapport entre la masse dudit noyau et la masse de ladite enveloppe est compris entre 30/70 et 90/10.

2. Composition selon la revendication 1, où ladite composition de noyau comprend 55 à 95 % en poids dudit deuxième monomère (méth)acrylate de noyau.

3. Composition selon la revendication 1 ou 2, où ledit rapport entre la masse dudit noyau et la masse de ladite enveloppe est compris entre 50/50 et 90/10, préférablement entre 50/50 et 70/30.

4. Composition selon l'une quelconque des revendications 1 à 3, où ledit premier monomère (méth)acrylate de noyau est choisi dans le groupe constitué par le méthacrylate de méthyle, l'acrylate de méthyle, le méthacrylate d'éthyle et l'acrylate d'éthyle, préférablement où ledit premier monomère (méth)acrylate de noyau est le méthacrylate de méthyle.

5. Composition selon l'une quelconque des revendications 1 à 4, où ledit deuxième monomère (méth)acrylate de noyau est estérifié à un alkyle linéaire ou ramifié comprenant au moins 5 et pas plus de 18 atomes de carbone, préférablement où le deuxième monomère (méth)acrylate de noyau est choisi dans le groupe constitué par l'acrylate de 2-éthylhexyle, le méthacrylate de stéaryle, l'acrylate de stéaryle, le méthacrylate de lauryle, l'acrylate de lauryle et le méthacrylate de 2-éthylhexyle, plus préférablement où ledit deuxième monomère (méth)acrylate de noyau es l'acrylate de 2-éthylhexyle.

6. Composition selon l'une quelconque des revendications 1 à 5, où ledit agent de réticulation est le méthacrylate d'allyle (ALMA).

7. Composition selon la revendication 6, où la concentration dudit agent de réticulation dans ladite composition d'enveloppe est comprise entre 0,1 % en moles et 2,0 % en moles, préférablement entre 0,5 % en moles et 1,5 % en moles.

8. Composition selon l'une quelconque des revendications 1 à 7, où ladite composition d'enveloppe comprend 50 à 100 % en poids d'un premier monomère de (méth)acrylate d'enveloppe, où ledit premier monomère de (méth)acrylate d'enveloppe est un monomère de (méth)acrylate estérifié à un alkyle linéaire ou ramifié ne comprenant pas plus de 4 atomes de carbone.

9. Composition selon l'une quelconque des revendications 1 à 8, où ladite viscosité spécifique dudit noyau est égale ou inférieure à 0,20, préférablement égale ou inférieure à 0,18, plus préférablement égale ou inférieure à 0,15, où ladite viscosité spécifique est déterminée à une concentration de 0,4 % dans le toluène à 30 °C.

10. Composition selon l'une quelconque des revendications 1 à 9, où ladite composition de noyau comprend 5 à 60 % en poids du premier monomère (méth)acrylate de noyau et 40 à 75 % en poids du deuxième monomère (méth)acrylate de noyau.

11. Procédé de lubrification externe du chlorure de polyvinyle, comprenant la mise en contact du chlorure de polyvinyle avec un lubrifiant tel que décrit dans l'une quelconque des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0532234 A
- EP 0779336 A
- US 2004152821 A1
- US 5612413 A

**Non-patent literature cited in the description**

- **SON Y.** *Polymer*, 2007, vol. 48, 632-637